# EUROPÄISCHE PATENTSCHRIFT

(11) **EP 1 276 816 B1**
(45) Veröffentlichungstag und Bekanntmachung des Hinweises auf die Patenterteilung: **22.10.2003**
(21) Anmeldenummer: 01929605.2
(22) Anmeldetag: 26.04.2001
(51) Int. Cl.: C08L 81/06, C08L 77/00, C08K 3/16

(54) **POLYARYLETHERSULFON/POLYAMID-BLENDS MIT VERBESSERTER ZÄHIGKEIT UND FLIESSFÄHIGKEIT**
BLENDS OF POLYARYLETHER SULPHONE AND POLYAMIDE, WITH IMPROVED VISCOSITY AND FLOWABILITY
MELANGES DE POLYARYLETHERSULFONE ET DE POLYAMIDE DE MEILLEURE VISCOSITE ET FLUIDITE

(30) Priorität: 28.04.2000 DE 10020785
(43) Veröffentlichungstag der Anmeldung: 22.01.2003
(73) Patentinhaber: BASF AKTIENGESELLSCHAFT, 67056 Ludwigshafen (DE)
(72) Erfinder: WEBER, Martin, 67487 Maikammer (DE); QUEISSER, Joachim, 68165 Mannheim (DE)
(74) Vertreter: Isenbruck, Günter, Dr.
(86) Internationale Anmeldenummer: EP0104730
(87) Internationale Veröffentlichungsnummer: WO01083618

(56) Entgegenhaltungen:
- EP-A- 0 270 998
- EP-A- 0 702 058
- DE-A- 19 839 331
- DATABASE CHEMABS [Online] CHEMICAL ABSTRACTS SERVICE, COLUMBUS, OHIO, US; MORI, RIKIZO: "Polysulfone-polyamide compositions" retrieved from STN Database accession no. 116:130582 XP002173077 -& JP 03 273056 A (RIKEN VINYL INDUSTRY CO., LTD., JAPAN) 4. Dezember 1991 (1991-12-04)

## Beschreibung

Die vorliegende Erfindung betrifft Polyarylethersulfon/Polyamid-Blends mit verbesserter Zähigkeit und Fließfähigkeit, Verfahren zu ihrer Herstellung und ihre Verwendung. Blends aus Polyarylethersulfonen und Polyamiden sind an sich bekannt. Beispielsweise sind in DE-A-21 22 735 thermoplastische Polymergemische aus aromatischen Polysulfonen und Polyamiden beschrieben. Derartige Produkte weisen interessante Eigenschaften wie hohe Steifigkeit und gute Chemikalienresistenz auf. Nachteilig ist die geringe Zähigkeit dieser Materialien, die auf die chemische Unverträglichkeit der Komponenten zurückzuführen ist. Zudem reicht die Fließfähigkeit nicht für alle Anwendungen, insbesondere beim Spritzgießen, aus.

In der EP-A-0 477 757 sind ebenfalls Polyamid/Polyarylethersulfon-Blends beschrieben, die teilaromatische Polyamide aufweisen. Die beschriebenen Formmassen weisen eine verbesserte Steifigkeit und Festigkeit bei Temperaturen bis 110°C auf.

Die bisher bekannten Formmassen haben nicht für alle Anwendungen eine ausreichende thermische Beständigkeit. Werden die Produkte über längere Zeit bei Temperaturen oberhalb von 150°C eingesetzt, so tritt ein deutlicher Rückgang des mechanischen Eigenschaftsniveaus auf.

Formmassen mit verbesserter thermischer Beständigkeit sind in der prioritätsälteren, nicht veröffentlichten DE-A-198 39 331 beschrieben. Die Zähigkeit und Fließfähigkeit dieser Produkte ist jedoch für manche Anwendungen immer noch nicht ausreichend.

EP-A 0 270 998 betrifft thermoplastische Formmassen auf der Basis von Polyamiden und Polyaryletherketonen. Die Formmassen enthalten Polyamide, Polyaryletherketone und hydroxylgruppenhaltige Verbindungen, die Epoxidharze sein können. die Polyaryletherketone können ferner bis 50 mol% an Polyarylethersulfoneinheiten aufweisen. Ferner können Füllstoffe und Kupferhalogenide vorliegen.

Funktionalisierte Polyarylethersulfone, wie sie erfindungsgemäß als Komponente B eingesetzt werden, sind jedoch nicht beschrieben.

JP-A-03 273056 betrifft Polysulfon/Polyamid-Blends. Es wird eine Kombination von Polyamiden, Polysulfonen und epoxidgruppenhaltigen Polymeren (Epoxidharzen) beschrieben, die zu einer verbesserten Mischbarkeit der Komponenten fuhren. Ferner können Füllstoffe eingesetzt werden.
Genauere Definitionen der eingesetzten Komponenten sind nicht aufgeführt, zudem ist der Einsatz von funktionalisierten Polyarylethersulfonen und von Kupferbromid und/oder Kupferiodid nicht beschrieben.

EP-A-0 702 058 betrifft Formmassen aus Polyarylenethern und Copolyamiden. Dabei werden spezielle teilaromatische Copolyamide eingesetzt. In der Polyarylenether-Definition werden auch Sulfonsäuregruppen aufgeführt. Als Vorteile der Blends werden hohe Steifigkeiten und Wärmeformbeständigkeiten und gute Verarbeitungsstabilitäten aufgeführt. Die Verwendung von funktionalisierten Polyarylethersulfonen und Epoxidharzen ist wiederum nicht beschrieben.

Aufgabe der vorliegenden Erfindung ist die Bereitstellung von Polyarylethersulfon/Polyamid-Blends, die neben einer guten Temperaturbeständigkeit verbesserte Zähigkeit und Fließfähigkeit aufweisen.

Die Aufgabe wird erfindungsgemäß gelöst durch eine thermoplastische Formmasse, enthaltend die Komponenten A, C, D, E und gegebenenfalls B, F und G, deren Gesamtgewicht 100 Gew.-% ergibt, sowie die Komponente H,
a) 5-94,8 Gew.-% mindestens eines Polyarylethersulfons als Kompo-nente A,
b) 1 - 10 Gew.-% mindestens eines fünktionalisierten Polyarylether-sulfons als Komponente B,
c) 5 - 94,8 Gew.-% mindestens eines Polyamids als Komponente C,
d) 0,1 - 10 Gew.-% mindestens eines Epoxidharzes als Komponente D,
e) 0,1 - 60 Gew.-% faser- oder teilchenförmige Füllstoffe oder deren Mischungen als Komponente E,
f) 0 - 40 Gew.-% schlagzähmodifizierende Kautschuke, die funktio-nelle Gruppen aufweisen, als Komponente F,
g) 0 - 40 Gew.-% weiterer üblicher Zusatzstoffe und Verarbeitungs-hilfsmittel als Komponente G,
h) 100 ppm - 0,5 Gew.-%, bezogen auf die Mengen der Komponenten A bis G Kupferbromid und/oder Kupferiodid als Komponente H.

Es wurde erfindungsgemäß gefunden, daß insbesondere durch Einsatz des in Komponente D beschriebenen Epoxidharzes die Schlagzähigkeit und Fließfähigkeit der Polymer-Blends deutlich verbessert werden konnte. Dabei bleiben die anderen vorteilhaften, mechanischen Eigenschaften erhalten.

Nachfolgend werden die einzelnen Komponenten der erfindungsgemäßen thermoplastischen Formmassen näher erläutert.

### Komponente A

Der Anteil der Komponente A an den erfindungsgemäßen Formmassen kann in weiten Bereichen von 5 bis 94,8 Gew.-% variieren. Bevorzugte erfindungsgemäße Formmassen enthalten die Komponente A in Mengen von 15 bis 85, insbesondere von 30 bis 60 Gew.-%, bezogen auf das Gesamtgewicht von Komponenten A bis G. Besonders bevorzugte Formmassen enthalten von 40 bis 50 Gew.-%, bezogen auf das Gesamtgewicht von A bis G, der Komponente A.

Als Komponente A wird erfindungsgemäß ein Polyarylenethersulfon eingesetzt. Es können auch Mischungen aus zwei oder mehreren unterschiedlichen Polyarylenethersulfonen als Komponente A eingesetzt werden.

Die Arylengruppen der Polyarylenethersulfone A können gleich oder verschieden sein und unabhängig voneinander einen aromatischen Rest mit 6 bis 18 C-Atomen bedeuten. Beispiele geeigneter Arylenreste sind Phenylen, Bisphenylen, Terphenylen, 1,5-Naphthylen, 1,6-Naphthylen, 1,5-Anthrylen, 9,10-Anthrylen oder 2,6-Anthrylen. Darunter werden 1,4-Phenylen und 4,4'-Biphenylen bevorzugt. Vorzugsweise sind diese aromatischen Reste nicht substituiert. Sie können jedoch einen oder mehrere Substituenten tragen. Geeignete Substituenten sind beispielsweise Alkyl-, Arylalkyl-, Aryl-, Nitro-, Cyano- oder Alkoxygruppen sowie Heteroaromaten wie Pyridin und Halogenatome. Zu den bevorzugten Substituenten zählen Alkylreste mit bis zu 10 Kohlenstoffatomen wie Methyl, Ethyl, i-Propyl, n-Hexyl, i-Hexyl, C₁- bis C₁₀-Alkoxyreste wie Methoxy, Ethoxy, n-Propoxy, n-Butoxy, Arylreste mit bis zu 20 Kohlenstoffatomen wie Phenyl oder Naphthyl sowie Fluor und Chlor. Des weiteren sind Substituenten bevorzugt, die durch Reaktion der Polyarylenethersulfone mit einer reaktiven Verbindung, die neben einer C-C-Doppel- oder Dreifachbindung eine bzw. mehrere Carbonyl-, Carbonsäure-, Carboxylat-, Säureanhydrid, Säureamid-, Säureimid-, Carbonsäureester-, Amino-, Hydroxyl-, Epoxi-, Oxazolin-, Urethan-, Harnstoff-, Lactam- oder Halogenbenzylgruppen enthält. Die Arylengruppen der Polyarylenether können neben - SO₂-, z.B. über -O-, -S-, -SO-, -CO-, -N=N-, -COO-, einen Alkylenrest, der gewünschtenfalls substituiert sein kann, oder eine chemische Bindung miteinander verknüpft sein.

Bevorzugte erfindungsgemäß brauchbare Polyarylenethersulfone (Komponente A) sind aufgebaut aus wiederkehrenden Einheiten der Formel I 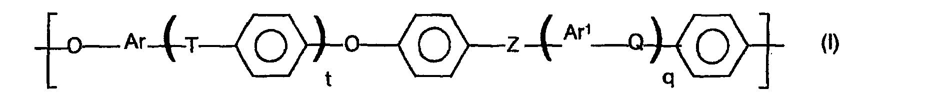 worin
t und q unabhängig voneinander für 0, 1, 2 oder 3 stehen,
Q, T, und Z unabhängig voneinander jeweils eine chemische Bindung oder eine Gruppe, ausgewählt unter -O-, -S-, -SO₂-, S=O, C=O, -N=N-, -R^{a}C=CR^{b}- und -CR^{c}R^{d}-, bedeuten,
wobei
R^{a} und R^{b} unabhängig voneinander jeweils für ein Wasserstoffatom oder eine C₁-C₁₂-Alkylgruppe stehen und
R^{c} und R^{d} unabhängig voneinander jeweils für ein Wasserstoffatom oder eine C₁-C₁₂-Alkyl-, C₁-C₁₂-Alkoxy- oder C₆-C₁₈-Arylgruppe stehen,
wobei
R^{c} und R^{d} gegebenenfalls unabhängig voneinander mit Fluor- und/oder Chloratomen substituiert sind oder gegebenenfalls zusammen mit dem C-Atom, an das sie gebunden sind, eine C₃-C₁₂-Cycloalkylgruppe bilden, die gegebenenfalls mit einer oder mehreren C₁-C₆-Alkylgruppen substituiert ist, mit der Maßgabe, daß mindestens eine der Gruppen T, Q und Z für -SO₂- oder C=O steht und, wenn t und q für 0 stehen, Z für -SO₂-steht,
Ar und Ar¹ unabhängig voneinander für C₆-C₁₈-Arylengruppen stehen, wobei diese gegebenenfalls mit C₁-C₁₂-Alkyl-, C₆-C₁₈-Aryl-, C₁-C₁₂-Alkoxygruppen oder Halogenatomen substituiert sind.

Es können auch verschiedene Einheiten der Formel I statistisch oder in Blöcken verteilt im Polyarylenethersulfon vorliegen.

Die Herstellung erfindungsgemäß brauchbarer Polyarylenether A kann beispielsweise in Anlehnung an GB 1 152 035 und US 4,870,153 erfolgen. Geeignete Verfahrensbedingungen zur Synthese von Polyarylen-ethersulfonen sind beispielsweise in EP-A- 0 113 112 und EP-A- 0 135 130 beschrieben. Besonders geeignet ist die Umsetzung der Monomeren in aprotischen polaren Lösungsmitteln in Gegenwart von wasserfreiem Alkalicarbonat. Eine besonders bevorzugte Kombination ist N-Methylpyrrolidon als Lösungsmittel und Kaliumcarbonat als Katalysator. Die Umsetzung in der Schmelze ist ebenfalls bevorzugt Die darin beschriebene Einführung von terminalen Anhydridgruppen ist für die vorliegende Erfindung jedoch nicht zwingend erforderlich. Beispiele für geeignete Polyarylenethersulfone A sind solche mit mindestens einer der folgenden wiederkehrenden Struktureinheiten I₁ bis I₁₅:

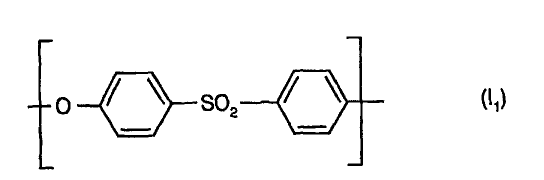

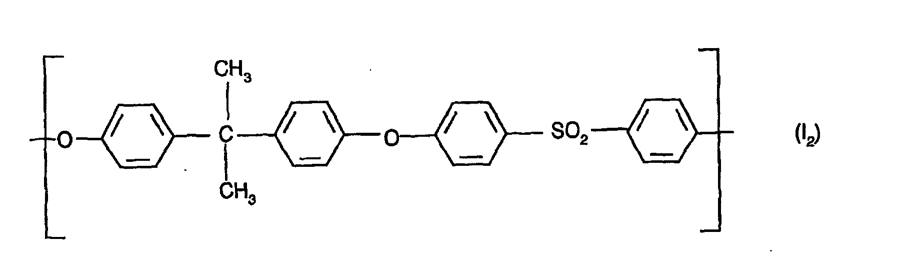

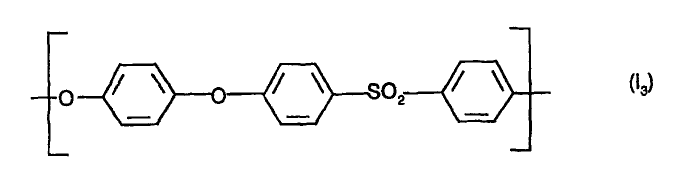

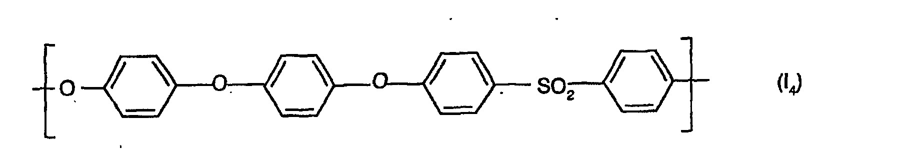

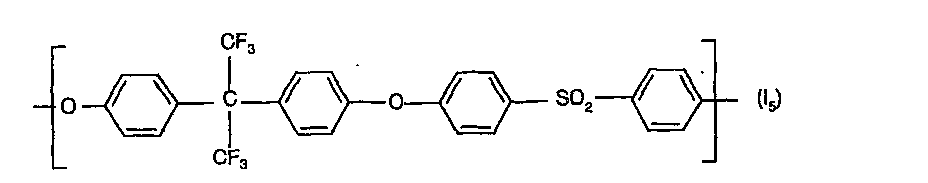

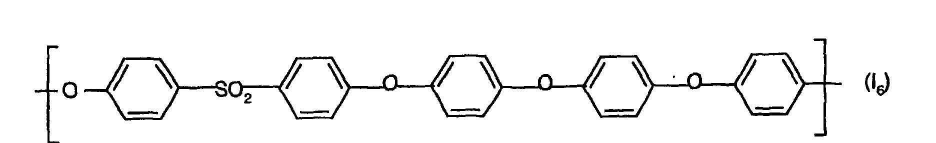

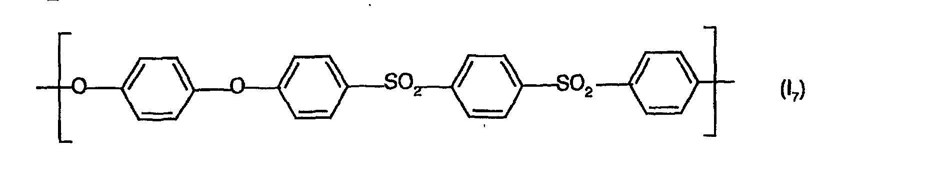

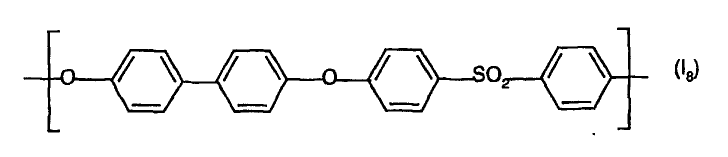

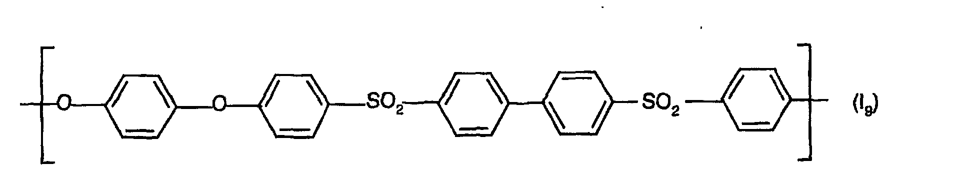

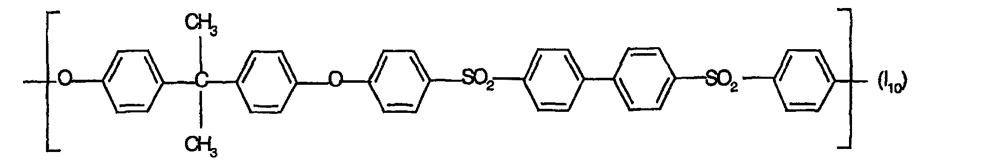

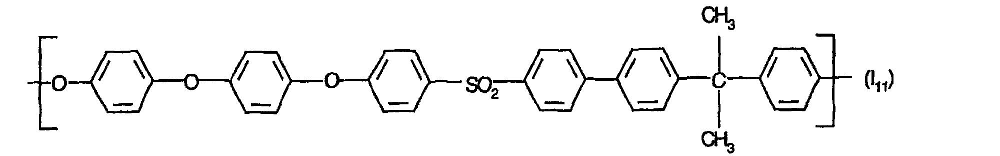

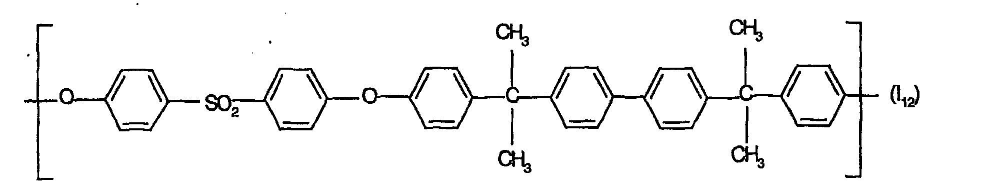

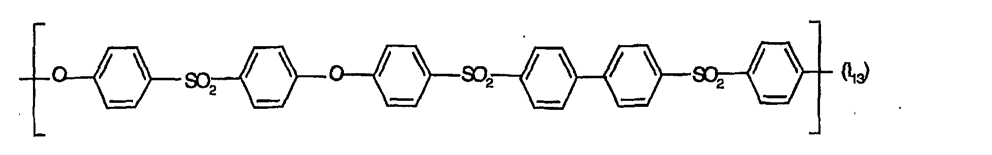

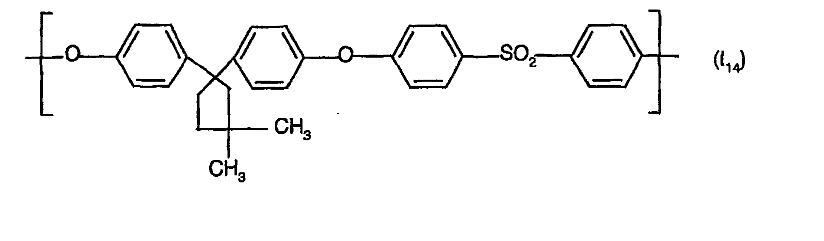

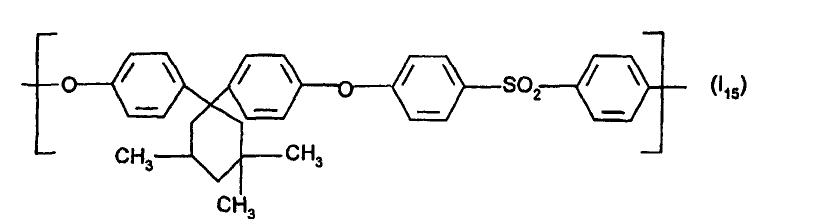

Als besonders bevorzugte Einheiten der Formel I sind zu nennen Einheiten der Formeln I₁ und I₂, welche einzeln oder im Gemisch vorliegen können.

### Komponente B

Die erfindungsgemäßen Formmassen enthalten die Komponente B in einer Menge von 1 bis 10 Gew.-%. Als Komponente B werden funktionalisierte Polyarylethersulfone eingesetzt.

Die in der Beschreibung und den Ansprüchen verwendeten Bezeichnungen "funktionalisiert" und "die funktionelle Gruppen aufweisen" beziehen sich auf das Vorliegen funktioneller Gruppen, die zur chemischen Umsetzung mit in Polyamiden vorliegenden funktionellen Gruppen geeignet sind. Dies sind insbesondere mit Carboxylgruppen und Aminogruppen reaktionsfähige fun-ktionelle Gruppen. Beispiele für derartige funktionelle Gruppen sind Hydroxy-, Amino-, Anhydrid-, Epoxy- oder Carboxylgruppen.

Carboxylgruppenhaltige Polyarylenethersulfone mit wiederkehrenden Struktur-elementen der Formeln I und II 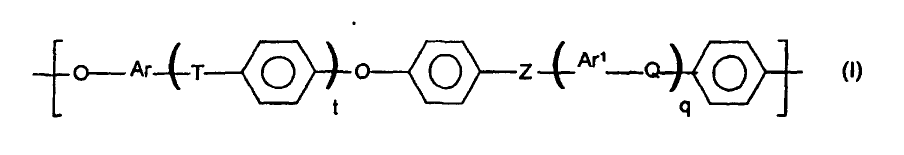 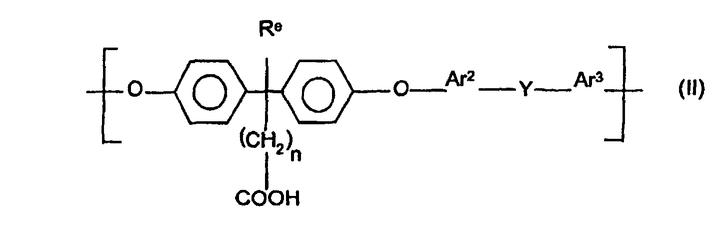 worin die Variablen die oben angegebenen Bedeutungen haben, Y die für T, Q, Z und Ar², Ar³ die für Ar, Ar¹ angegebene Bedeutung haben und R^{e} für H, C₁-C₆-Alkyl, oder -(CH₂)ₙ-COOH steht mit n Zahl von 0 bis 10, zählen nach einer Ausführungsform zu den bevorzugten funktionalisierten Polyarylenethersulfonen, insbesondere in Mischung mit Polyarylenethersulfonen, die inerte Gruppen enthalten.

Beispielsweise sind diese Carboxylgruppen enthaltenden Polyarylenether zugänglich in Anlehnung an die EP-A-0 185 237 sowie nach den von I.W. Parsons et al., in Polymer, 34, 2836 (1993) und T. Koch, H. Ritter, in Macromol. Phys. 195, 1709 (1994) beschriebenen Verfahren.

Beispiele für geeignete Strukturelemente II sind: 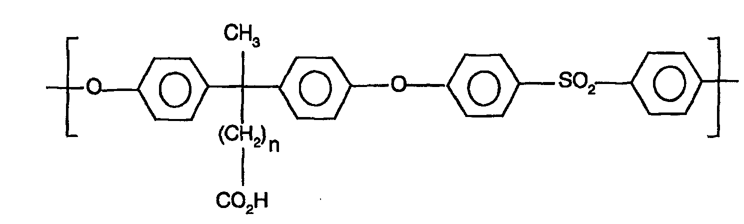 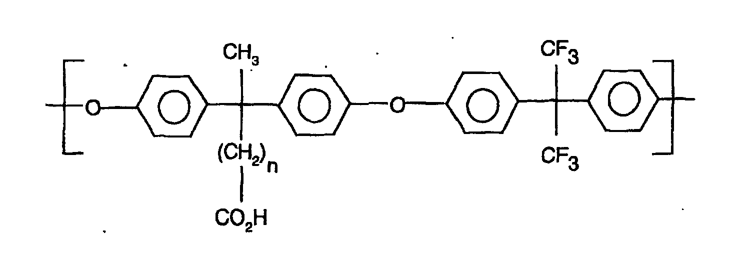 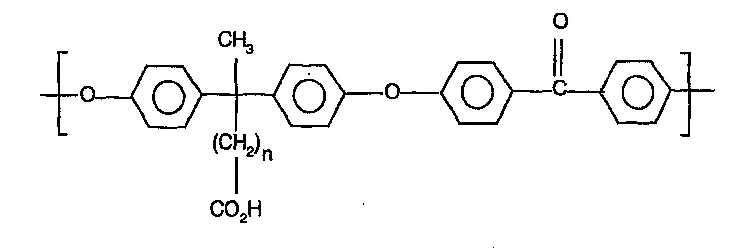 worin n jeweils für eine ganze Zahl von 0 bis 4 steht.

Die säuregruppenhaitigen Polyarylenethersulfone weisen Viskositätszahlen von etwa 15 bis 80 ml/g auf (bestimmt in 1%iger NMP-Lösung bei 25°C). Wenn diese säuregruppenhaltigen Polyarylenethersulfone eingesetzt werden, beträgt der Anteil freier Säuregruppen in der Komponente A bevorzugt 0,05 bis 25, vorzugsweise 0,1 bis 20 und insbesondere 0,1 bis 15 Mol-%, wobei die Bestimmung des Anteils an Säuregruppen, wie bei I.W. Parsons et al., Polymer, 34, 2836 (1993) beschrieben, durch ¹H-NMR erfolgt.

Die Polyarylenethersulfone A und B können auch Co- oder Blockcopolymere sein, in denen Polyarylenethersulfonsegmente und Segmente von anderen thermoplastischen Polymeren, wie Polyestern, aromatischen Polycarbonaten, Polyestercarbonaten, Polysiloxanen, Polyimiden oder Polyetherimiden vorliegen. Die Molekulargewichte (Zahlenmittel) der Blöcke bzw. der Pfropfarme in den Copolymeren liegen in der Regel im Bereich von 1.000 bis 30.000 g/mol. Die Blöcke unterschiedlicher Struktur können alternierend oder statistisch angeordnet sein. Der Gewichtsanteil der Polyarylenethersulfone in den Co- oder Blockcopolymeren beträgt im allgemeinen mindestens 10 Gew.-%. Der Gewichtsanteil der Polyarylenethersulfone kann bis zu 97 Gew.-% betragen. Bevorzugt werden Co- oder Blockcopolymere mit einem Gewichtsanteil an Polyarylenethersulfonen mit bis zu 90 Gew.-%. Besonders bevorzugt werden Co- oder Blockcopolymere mit 20 bis 80 Gew.-% Polyarylenethersulfonen.

Im allgemeinen weisen die Polyarylenethersulfone mittlere Molekulargewichte Mₙ (Zahlenmittel) im Bereich von 5.000 bis 60.000 g/mol und relative Viskositäten von 0,20 bis 0,95 dl/g auf. Die relativen Viskositäten werden je nach Löslichkeit der Polyarylenethersulfone entweder in 1 gew.-%iger N-Methylpyrrolidon-Lösung, in Mischungen aus Phenol und Dichlorbenzol oder in 96%iger Schwefelsäure bei jeweils 20°C bzw. 25°C gemessen.

Je nach Synthesebedingungen können die Polyarylenethersulfone A und B unterschiedliche Endgruppen aufweisen. Darunter sind solche, die sich gegenüber der Komponente C inert verhalten und solche, die mit funktionellen Gruppen der Polyamide C, insbesondere den Amino- und Carboxylgruppen reagieren können.

Zu den inerten Endgruppen zählen Halogen-, insbesondere Chlor-, Alkoxy-, vor allem Methoxy- oder Ethoxy-, Aryloxy-, bevorzugt Phenoxy oder Benzyloxygruppen. Als Beispiele für reaktive Gruppen sind Hydroxy-, Amino-, Anhydrid-, Epoxy- oder Carboxylgruppen zu nennen. Darunter sind Polyarylenethersulfone B mit Amino-, Anhydrid oder Epoxyendgruppen oder deren Mischungen besonders bevorzugt.

Polyarylenethersulfone B mit Hydroxyendgruppen können beispielsweise durch geeignete Wahl des molaren Verhältnisses zwischen Dihydroxy- und Dichlormonomeren hergestellt werden (siehe z.B. McGrath et al Polym. Eng. Sci. 17, 647 (1977); Elias "Makromoleküle 4. Aufl. (1981) Seiten 490 bis 493, Hütig & Wepf-Verlag, Basel).

Polyarylenethersulfone B, die Aminoendgruppen aufweisen, können z.B. dadurch erhalten werden, daß z.B. p-Aminophenol während der Polymerisation zugegen ist (J.E. McGrath, Polymer 30, 1552 (1989).

Die Herstellung von Anhydridendgruppen enthaltenden Polyarylenethersulfonen B ist z.B. in der DE-A 44 29 107 beschrieben.

Polyarylenethersulfone B mit Epoxidendgruppen lassen sich aus Polyarylenethersulfonen mit OH-Endgruppen herstellen. Hierzu können letztere beispielsweise mit geeigneten Verbindungen, die Propylenoxidgruppen aufweisen oder aus denen Propylenoxidgruppen zugänglich sind, bevorzugt Epichlorhydrin, umgesetzt werden.

Die Umsetzung der hydroxyterminierten Polyarylenethersulfone mit Epichlorhydrin findet bevorzugt bei Temperaturen im Bereich von 30 bis 200°C in einem Lösungsmittel statt. Als Lösungsmittel eignen sich dabei z.B. ein aliphatisches oder aromatisches Sulfid oder Sulfon oder auch N-Methylpyrrolidon. In der Regel wird die Reaktion in schwach basischem Milieu durchgeführt, um einer Ringöffnung der Epoxygruppen möglichst vorzubeugen.

Gemäß einer Ausführungsform enthalten die erfindungsgemäßen Formmassen nur Polyarylenethersulfone A, die im wesentlichen frei von reaktiven Endgruppen sind. Es können jedoch nach einer bevorzugten Ausführungsform auch Mischungen verschiedener Polyarylenethersulfone A und B mit inerten und reaktiven Endgruppen eingesetzt werden. Der Anteil der Polyarylenethersulfone mit reaktiven Endgruppen kann beispielsweise von 2 bis 98, bevorzugt von 5 bis 50 Gew.-%, bezogen auf die Komponenten A und B, betragen.

### Komponente C

Die Komponente C ist in den erfindungsgemäßen Formmassen in einer Menge von 5 bis 94,8, vorzugsweise 10 bis 80, insbesondere 10 bis 50 und speziell 15 bis 25 Gew.-% enthalten. Es handelt sich um mindestens ein Polyamid. Dabei kann das Polyamid frei gewählt werden aus Polyamiden und Copolyamiden. Es handelt sich um thermoplastische Polyamide.

Die als Komponente C in den Massen enthaltenen Polyamide sind ebenfalls bekannt und umfassen teilkristalline und amorphe Harze mit einem Molekulargewicht (Gewichtsmittelwert) von mindestens 5.000, die gewöhnlich als Nylon bezeichnet werden. Solche Polyamide sind z.B. in den US-Patentschriften 2,071,250; 2,071,251; 2,130,523; 2,130,948; 2,241,322; 2,312,966; 2,512,606 und 3,393,210 beschrieben.

Die Polyamide C können z.B. durch Kondensation äquimolarer Mengen einer gesättigten oder einer aromatischen Dicarbonsäure mit 4 bis 12 Kohlenstoffatomen, mit einem gesättigten oder aromatischen Diamin, welches bis 14 Kohlensoffatome aufweist oder durch Kondensation von ω-Aminocarbon-säuren bzw. Polyaddition von entsprechenden Lactamen hergestellt werden.

Beispiele für derartige Polyamide sind Polyhexamethylenadipinsäureamid (Nylon 66), Polyhexamethylenazelainsäureamid (Nylon 69), Polyhexamethylen-sebacinsäureamid (Nylon 610), Polyhexamethylendodecandisäureamid (Nylon 612), die durch Ringöffnung von Lactamen erhaltenen Polyamide wie Polycaprolactam, Polylaurinsäurelactam, ferner Poly-11-aminoundecansäure und ein Polyamid aus Di(p-aminocyclohexyl)-methan und Dodecandisäure.

Es ist auch möglich, Polyamide zu verwenden, die durch Copolykondensation von zwei oder mehr der obengenannten Monomeren oder ihrer Komponenten hergestellt worden sind, z.B. Copolymere aus Adipinsäure, Isophthalsäure oder Terephthalsäure und Hexamethylendiamin oder Copolymere aus Caprolactam, Terephthalsäure und Hexamethylendiamin. Derartige teilaromatische Copolyamide enthalten 40 bis 90 Gew.-% Einheiten, die sich von Terephthalsäure und Hexamethylendiamin ableiten. Ein geringer Anteil der Terephthalsäure, vorzugsweise nicht mehr als 10 Gew.-%, der gesamten eingesetzten aromatischen Dicarbonsäuren können durch Isophthalsäure oder andere aromatische Dicarbonsäuren, vorzugsweise solche, in denen die Carboxylgruppen in paraStellung stehen, ersetzt werden.

Als Monomere kommen auch cyclische Diamine wie die der allgemeinen Formel m 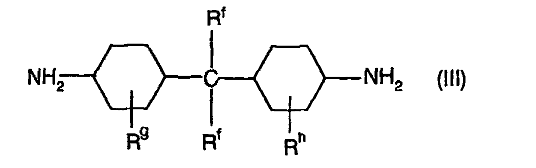 in der
- R^{f}: Wasserstoff oder eine C₁-C₄-Alkylgruppe,
- R^{g}: eine C₁-C₄-Alkylgruppe oder Wasserstoff und
- R^{h}: eine C₁-C₄-Alkylgruppe oder Wasserstoff bedeutet, in Betracht.

Besonders bevorzugte Diamine III sind Bis(4-aminocyclohexyl)-methan, Bis(4-amino-3-methylcyclohexyl)methan, Bis(4-aminocyclohexyl)-2,2-propan oder Bis(4-amino-3-methylcyclohexyl)-2, 2-propan.
Als weitere Diamine III seien 1,3- oder 1,4-Cyclohexandiamin oder Isophorondiamin genannt.

Neben den Einheiten, die sich von Terephthalsäure und Hexamethylendiamin ableiten, enthalten die teilaromatischen Copolyamide Einheiten, die sich von ε-Caprolactam ableiten und/oder Einheiten, die sich von Adipinsäure und Hexamethylendiamin ableiten.

Der Anteil an Einheiten, die sich von ε-Caprolactam ableiten, beträgt bis zu 50 Gew.-%, vorzugsweise 20 bis 50 Gew.-%, insbesondere 25 bis 40 Gew.-%, während der Anteil an Einheiten, die sich von Adipinsäure und Hexamethylendiamin ableiten, bis zu 60 Gew.-%, vorzugsweise 30 bis 60 Gew.-% und insbesondere 35 bis 55 Gew.-% beträgt
Die Copolyamide können auch sowohl Einheiten von ε-Caprolactam als auch Einheiten von Adipinsäure und Hexamethylendiamin enthalten; in diesem Fall ist darauf zu achten, daß der Anteil an Einheiten, die frei von aromatischen Gruppen sind, mindestens 10 Gew.-% beträgt, vorzugsweise mindestens 20 Gew.-%. Das Verhältnis der Einheiten, die sich von ε-Caprolactam und von Adipinsäure und Hexamethylendiamin ableiten, unterliegt dabei keiner besonderen Beschränkung.

Als besonders vorteilhaft für viele Anwendungszwecke haben sich Polyamide mit 50 bis 80, insbesondere 60 bis 75 Gew.-% Einheiten, die sich von Terephthalsäure und Hexamethylendiamin ableiten und 20 bis 50, vorzugsweise 25 bis 40 Gew.-% Einheiten, die sich von ε-Caprolactam ableiten, erwiesen.

Die Herstellung der teilaromatischen Copolyamide kann z.B. nach dem in den EP-A-0 129 195 und EP-A-0 129 196 beschriebenen Verfahren erfolgen.

Bevorzugte teilaromatische Polyamide sind solche, die einen Gehalt an Triamineinheiten, insbesondere Einheiten des Dihexamethylentriamins von unter 0,5 Gew.-% aufweisen. Besonders bevorzugt werden solche teilaromatischen Polyamide mit Triamingehalten von 0,3 Gew.-% oder weniger.

Bevorzugt werden lineare Polyamide mit einem Schmelzpunkt über 200°C.

Bevorzugte Polyamide sind Polyhexamethylenadipinsäureamid, Polyhexa-methylensebacinsäureamid und Polycaprolactam sowie Polyamid 6/6T und Polyamid 66/6T sowie Polyamide, die cyclische Diamine als Comonomere enthalten. Die Polyamide weisen im allgemeinen eine relative Viskosität von 2,0 bis 5 auf, bestimmt an einer 1 gew.-%igen Lösung in 96%iger Schwefelsäure bei 23°C, was einem Molekulargewicht (Zahlenmittel) von etwa 15.000 bis 45.000 entspricht. Polyamide mit einer relativen Viskosität von 2,4 bis 3,5, insbesondere 2,5 bis 3,4, werden besonders bevorzugt verwendet.

Außerdem seien noch Polyamide erwähnt, die z.B. durch Kondensation von 1,4-Diaminobutan mit Adipinsäure unter erhöhter Temperatur erhältlich sind (Polyamid 4,6). Herstellungsverfahren für Polyamide dieser Struktur sind z.B. in den EP-A-0 038 094, EP-A-0 038 582 und EP-A-0 039 524 beschrieben.

Erfindungsgemäß ebenfalls geeignete Copolyamide C sind im wesentlichen aufgebaut aus
c1: 30 bis 44, vorzugsweise 32 bis 40 und insbesondere 32 bis 38 mol-% Einheiten C₁, welche sich von Terephthalsäure ableiten,
c2: 6 bis 20, vorzugsweise 10 bis 18 und insbesondere 12 bis 18 mol-% Einheiten C₂, welche sich von Isophthalsäure ableiten,
c3: 43 bis 49,5, vorzugsweise 46 bis 48,5 und insbesondere 46,3 bis 48,2 mol-% Einheiten C₃, welche sich von Hexamethylendiamin ableiten,
c4: 0,5 bis 7, vorzugsweise 1,5 bis 4 und insbesondere 1,8 bis 3,7 mol-% Einheiten C₄, welche sich von aliphatischen cyclischen Diaminen mit 6 bis 30, vorzugsweise 13 bis 29 und insbesondere 13 bis 17 C-Atomen ableiten, vorzugsweise der vorstehenden allgemeinen Formel III,
c5: 0 bis 4 mol-% weiteren von C₁ bis C₄ verschiedenen polyamidbildenden Monomeren C₅,
wobei die Molprozente der Komponenten C₁ bis C₅ zusammen 100% ergeben.

Die Diamineinheiten C₃ und C₄ werden vorzugsweise etwa äquimolar mit den Dicarbonsäureeinheiten C₁ und C₂ umgesetzt.

Neben den vorstehend beschriebenen Einheiten C₁ bis C₄ können die Copolyamide C bis zu 4, vorzugsweise bis zu 3,5 Gew.-%, bezogen auf die Komponenten C₁ bis C₄ an weiteren polyamidbildenden Monomeren C₅ enthalten.

Aromatische Dicarbonsäuren sind beispielsweise substituierte Terephthal- und Isophthalsäuren wie 3-t-Butylisophthalsäure, mehrkernige Dicarbonsäuren, z.B. 4,4'- und 3,3'-Diphenyldicarbonsäure, 4,4'- und 3,3'-Diphenylmethan-dicarbonsäure, 4,4'- und 3,3'-Diphenylsulfondicarbonsäure, 1,4- oder 2,6-Naphthalindicarbonsäure und Phenoxyterephthalsäure.

Weitere polyamidbildende Monomere C₅ können sich z.B. von Dicarbonsäuren mit 4 bis 16 Kohlenstoffatomen und aliphatischen Diaminen mit 4 bis 16 Kohlenstoffatomen sowie von Aminocarbonsäuren bzw. entsprechenden Lactamen mit 7 bis 12 Kohlenstoffatomen ableiten. Als geeignete Monomere dieser Typen seien hier nur Suberinsäure, Azelainsäure oder Sebacinsäure als Vertreter der aliphatischen Dicarbonsäuren, 1,4-Butandiamin, 1,5-Pentandiamin oder Piperazin, als Vertreter der Diamine und Caprolactam, Capryllactam, Önanthlactam, Laurinlactam und ω-Aminoundecansäure als Vertreter von Lactamen bzw. Aminocarbonsäuren genannt.

Die Schmelzpunkte dieser Copolyamide C liegen in der Regel im Bereich von 290 bis 340°C, bevorzugt von 292 bis 330°C, wobei dieser Schmelzpunkt mit einer hohen Glasübergangstemperatur von in der Regel mehr als 120°C, insbesondere mehr als 130°C (im trockenen Zustand) verbunden ist.

Bei diesen Copolyamiden C werden erfindungsgemäß solche bevorzugt verwendet, die einen Kristallinitätsgrad > 30%, bevorzugt > 35%, und insbesondere > 40% aufweisen.

Der Kristallinitätsgrad ist ein Maß für den Anteil an kristallinen Fragmenten im Copolyamid und wird durch Röntgenbeugung oder indirekt durch Messung von ΔHₖᵣᵢₛₜ. bestimmt.

Selbstverständlich können auch Mischungen dieser Copolyamide C eingesetzt werden, wobei das Mischungsverhältnis beliebig ist.

Geeignete Verfahren zur Herstellung der Copolyamide sind dem Fachmann bekannt, siehe auch EP-A-0702 058.

Die erfindungsgemäß eingesetzten Polyamide oder Copolyamide der Komponente C weisen vorzugsweise eine Viskositätszahl, gemessen in 96%iger Schwefelsäure, 0,5%ige Lösung nach DIN 53 727 von mehr als 140, vorzugsweise mehr als 150 ml/g auf.

### Komponente D

Als Komponente D enthalten die erfindungsgemäßen Formmassen 0,1 bis 10, vorzugsweise 0,3 bis 8, insbesondere 0,5 bis 2 Gew.-% mindestens eines Epoxidharzes. Dabei können alle bekannten Epoxidharze eingesetzt werden. Eine umfassende Beschreibung der Epoxidharze findet sich beispielsweise bei B. Ellis (Herausgeber) "Chemistry and Technology of Epoxy-Resins", Blackie Academic & Professional 1993.

Bevorzugte Epoxyharze sind solche der allgemeinen Formel II, die üblicherweise durch Kondensation von 2,2-Bis-(p-hydroxyphenyl)propan (Bisphenol A) und Epichlorhydrin erhältlich sind.

Sie weisen bevorzugt die nachstehende allgemeine Formel II D auf: 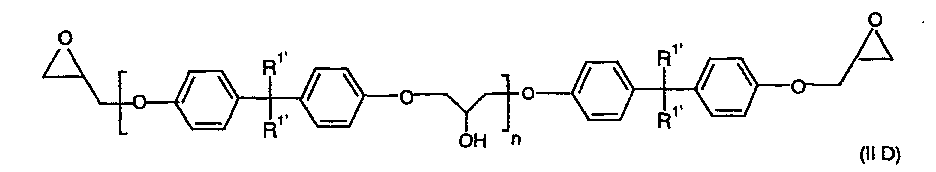 wobei
- R^{1'}: einen Wasserstoffrest, einen Alkylrest mit 1 bis 16 C-Atomen, vorzugsweise Methyl und
- n: 2 bis 50, vorzugsweise 2 bis 13 bedeuten.

Epoxyharze weisen üblicherweise eine Epoxidzahl gemäß ISO 3001 von 1,5 bis 1,9, vorzugsweise 1,68 bis 1,75 auf. Der Erweichungspunkt gemäß DIN 51920 liegt vorzugsweise von 75 bis 100, insbesondere 82 bis 90°C. Die Schmelzviskosität gemäß DIN 5301 8 T1 bei 175°C beträgt vorzugsweise 250 bis 600, insbesondere 350 bis 480 mPas.

Weitere bevorzugte Epoxyharze sind solche der allgemeinen Formel III D 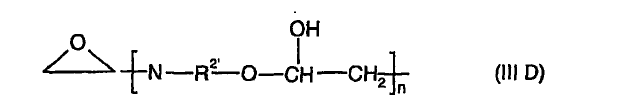 in der n die gleiche Bedeutung wie in II D hat und R^{2'} einen Alkylrest mit 1 bis 16 C-Atomen bedeutet.

Bevorzugte Reste R^{2'} sind Propyl und Butyl.

Ferner sind Epoxyharze der allgemeinen Formel IV D geeignet 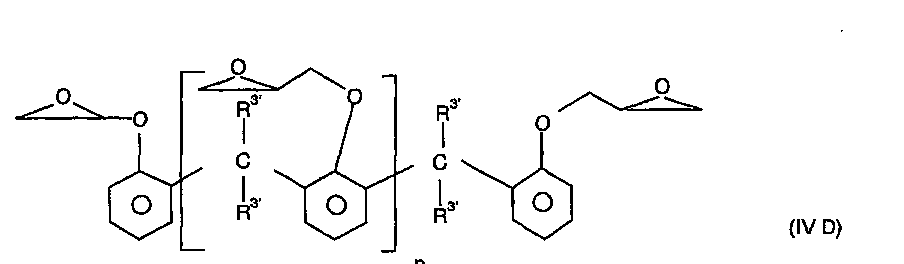 mit R^{3'} und n wie in Formel II für R^{1'} und n definiert, wobei R^{3'} vorzugsweise Wasserstoff ist.

Cycloaliphatische Epoxy-Harze (Formel V D) sind ebenso geeignet: 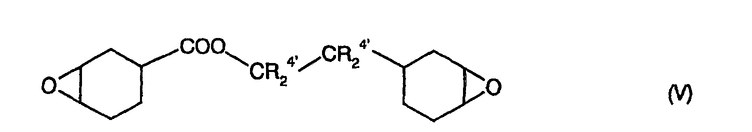 in welcher R^{4'} für einen Alkylrest mit 1 bis 16 C-Atomen steht. Als weitere bevorzugte Harze seien Kondensationsprodukte von Alkoholen, insbesondere Diolen und/oder Bisphenolen mit Triglycidylisocyanurat erwähnt

Bevorzugt werden feste Epoxidharze mit einem Erweichungspunkt, bestimmt nach DIN 51 920, von mehr als 60, vorzugsweise mehr als 70°C, verwendet. Es können jedoch auch flüssige oder halbfeste Harze verwendet werden.

### Komponente E

Die erfindungsgemäßen Formmassen enthalten von 0,1 bis 60 Gew.-% faser- oder teilchenförmige Füllstoffe oder deren Gemische. Die erfindungsgemäßen Formmassen enthalten vorzugsweise 4,7 bis 50, insbesondere von 1,5 bis 40 Gew.-% faser- oder teilchenförmige Füllstoffe (oder Verstärkungsstoffe) oder deren Mischungen.

Bevorzugte faserförmige Füll- oder Verstärkungsstoffe sind Kohlenstoffasern, Kaliumtitanatwhisker, Aramidfasern und besonders bevorzugt Glasfasern. Bei der Verwendung von Glasfasern können diese zur besseren Verträglichkeit mit dem Matrixmaterial mit einer Schlichte, bevorzugt einer Polyurethanschlichte und einem Haftvermittler ausgerüstet sein. Im allgemeinen haben die verwendeten Kohlenstoff- und Glasfasern einen Durchmesser im Bereich von 6 bis 20 µm.

Die Einarbeitung der Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Kohlenstoff- oder Glasfasern können auch in Form von Geweben, Matten oder Glasseidenrovings eingesetzt werden.

Als teilchenförmige Füllstoffe eignen sich amorphe Kieselsäure, Carbonate wie Magnesiumcarbonat, Kreide, gepulverter Quarz, Glimmer, unterschiedlichste Silikate wie Tone, Muskovit, Biotit, Suzoit, Zinnmaletit, Talkum, Chlorit, Phlogophit, Feldspat, Calciumsilikate wie Wollastonit oder Aluminiumsilikate wie Kaolin, besonders kalzinierter Kaolin.

Nach einer besonders bevorzugten Ausführungsform werden teilchenförmige Füllstoffe verwendet, von denen mindestens 95 Gew.-%, bevorzugt mindestens 98 Gew.-% der Teilchen einen Durchmesser (größte Ausdehnung), bestimmt am fertigen Produkt, von weniger als 45 µm, bevorzugt weniger als 40 µm aufweisen und deren sogenanntes Aspektverhältnis im Bereich von 1 bis 25, bevorzugt im Bereich von 2 bis 20 liegt, bestimmt am fertigen Produkt.

Die Teilchendurchmesser können dabei z.B. dadurch bestimmt werden, daß elektronenmikroskopische Aufnahmen von Dünnschnitten der Polymermischung aufgenommen und mindestens 25, bevorzugt mindestens 50 Füllstoffteilchen für die Auswertung herangezogen werden. Ebenso kann die Bestimmung der Teilchendurchmesser über Sedimentationsanalyse erfolgen, gemäß Transactions of ASAE, Seite 491 (1983). Der Gewichtsanteil der Füllstoffe, die weniger als 40 um lang sind kann auch mittels Siebanalyse gemessen werden. Das Aspektverhältnis ist das Verhältnis von Teilchendurchmesser zu Dicke (größter Ausdehnung zu kleinster Ausdehnung).

Besonders bevorzugt werden als teilchenförmige Füllstoffe Talkum, Kaolin, wie calcinierter Kaolin oder Wollastonit oder Mischungen aus zwei oder allen dieser Füllstoffe. Darunter wird Talkum mit einem Anteil von mindestens 95 Gew.-% an Teilchen mit einem Durchmesser von kleiner als 40 µm und einem Aspektverhältnis von 1,5 bis 25, jeweils bestimmt am fertigen Produkt, besonders bevorzugt. Kaolin hat bevorzugt einen Anteil von mindestens 95 Gew.-% an Teilchen mit einem Durchmesser von kleiner als 20 µm und ein Aspektverhältnis von 1,2 bis 20, jeweils bestimmt am fertigen Produkt.

### Komponente F

Optional können die erfindungsgemäßen Formmassen schlagzähmodifizierende Kautschuke F enthalten, die funktionelle Gruppen aufweisen. Deren Anteil kann in weiten Bereichen variieren. Bevorzugte erfindungsgemäße Formmassen enthalten die Komponente F in Mengen von 0 bis 30, insbesondere von 0 bis 20 Gew.-%, bezogen auf das Gesamtgewicht von A bis G. Besonders bevorzugte Formmassen enthalten von 0 bis 17,5 Gew.-%, bezogen auf das Gesamtgewicht von A bis G, der Komponente F.

Als Komponente F können auch Mischungen aus zwei oder mehreren unterschiedlichen schlagzähmodifizierenden Kautschuken eingesetzt werden.

Kautschuke, die die Zähigkeit der Formmassen erhöhen enthalten im allgemeinen einen elastomeren Anteil, der eine Glasübergangstemperatur von weniger als -10°C, vorzugsweise von weniger als -30°C aufweist, und sie enthalten mindestens eine funktionelle Gruppe, die mit dem Polyamid bzw. Polyarylether wechselwirken kann.

Geeignete funktionelle Gruppen sind beispielsweise Carbonsäure-, Carbonsäureanhydrid-, Carbonsäureester-, Carbonsäureamid-, Carbonsäureimid-, Amino-, Hydroxyl-, Epoxid-, Urethan- oder Oxazolingruppen.

Zu den bevorzugten funktionalisierten Kautschuken zählen funktionalisierte Polyolefinkautschuke, die aus folgenden Komponenten aufgebaut sind:
f₁) 40 bis 99 Gew.-% mindestens eines α-Olefins mit 2 bis 8 C-Atomen;
f₂) 0 bis 50 Gew.-% eines Diens;
f₃) 0 bis 45 Gew.-% eines C₁-C₁₂-Alkylesters der Acrylsäure oder Methacrylsäure oder Mischungen derartiger Ester;
f₄) 0 bis 40 Gew.-% einer ethylenisch ungesättigten C₂-C₂₀-Mono- oder Dicarbonsäure oder eines funktionellen Derivats einer solchen Säure;
f₅) 1 bis 40 Gew.-% eines Epoxygruppen enthaltenden Monomeren; und
f₆) 0 bis 5 Gew.-% sonstiger radikalisch polymerisierbarer Monomerer.

Als Beispiele für geeignete α-Olefine f₁) können Ethylen, Propylen, 1-Butylen, 1-Pentylen, 1-Hexylen, 1-Heptylen, 1-Octylen, 2-Methylpropylen, 3-Methyl-1-butylen und 3-Ethyl-1-butylen genannt werden, wobei Ethylen und Propylen bevorzugt sind.

Als geeignete Dien-Monomere f₂) seien beispielsweise konjugierte Diene mit 4 bis 8 C-Atomen, wie Isopren und Butadien, nicht-konjugierte Diene mit 5 bis 25 C-Atomen, wie Penta-1,4-dien, Hexa-1,4-dien, Hexa-1,5-dien, 2,5-Dimethylhexa-1,5-dien und Octa-1,4-dien, cyclische Diene, wie Cyclopentadien, Cyclohexadiene, Cyclooctadiene und Dicyclopentadien, sowie Alkenylnorbornene, wie 5-Ethyliden-2-norbornen, 5-Butyliden-2-norbornen, 2-Methallyl-5-norbornen, 2-Isopropenyl-5-norbornen und Tricyclodiene, wie 3-Methyltricyclo-(5.2.1.0.2.6)-3,8-decadien, oder deren Mischungen genannt. Bevorzugt werden Hexa-1,5-dien, 5-Ethyliden-norbornen und Dicyclopentadien. Der Diengehalt beträgt vorzugsweise 0,5 bis 50, insbesondere 2 bis 20 und besonders bevorzugt 3 bis 15 Gew.-%, bezogen auf das Gesamtgewicht des Olefinpolymerisats.

Beispiele für geeignete Ester f₃) sind Methyl-, Ethyl-, Propyl-, n-Butyl, i-Butyl- und 2-Ethylhexyl-, Octyl- und Decylacrylate bzw. die entsprechenden Ester der Methacrylsäure. Von diesen werden Methyl-, Ethyl-, Propyl-, n-Butyl- und 2-Ethylhexylacrylat bzw.-methacrylat besonders bevorzugt.

Anstelle der Ester f₃) oder zusätzlich zu diesen können in den Olefinpolymerisaten auch säurefunktionelle und/oder latent säurefunktionelle Monomere ethylenisch ungesättigter Mono- oder Dicarbonsäuren f₄) enthalten sein.

Als Beispiele für Monomere f₄) seien Acrylsäure, Methacrylsäure, tertiäre Alkylester dieser Säuren, insbesondere tert.-Butylacrylat und Dicarbonsäuren, wie Maleinsäure und Fumarsäure, oder Derivate dieser Säuren sowie deren Monoester genannt.

Als latent säurefunktionelle Monomere sollen solche Verbindungen verstanden werden, die unter den Polymerisationsbedingungen bzw. bei der Einarbeitung der Olefinpolymerisate in die Formmassen freie Säuregruppen bilden. Als Beispiele hierfür seien Anhydride von Dicarbonsäuren mit 2 bis 20 C-Atomen, insbesondere-Maleinsäureanhydrid und tertiäre C₁-C₁₂-Alkylester der vorstehend genannten Säuren, insbesondere tert.-Butylacrylat und tert.-Butylmethacrylat angeführt.

Ethylenisch ungesättigte Dicarbonsäuren und Anhydride f₄) sind darstellbar durch folgende allgemeine Formeln IV und V:

R²C(COOR³) = (COOR⁴)R⁵ (IV)

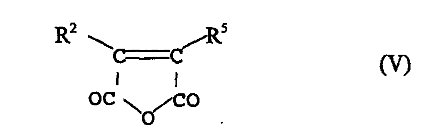

worin R², R³, R⁴ und R⁵ unabhängig voneinander für H oder C₁-C₆-Alkyl stehen.

Epoxygruppen tragende Monomere f₅) sind darstellbar durch folgende allgemeine Formeln VI und VII 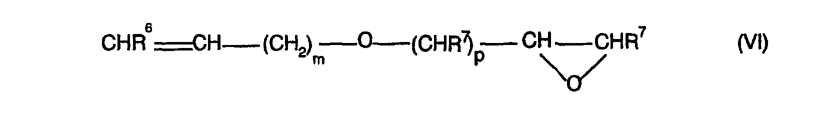 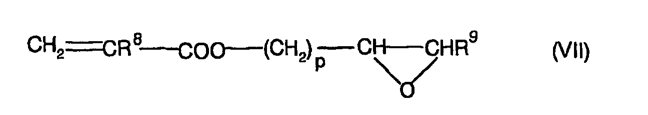 worin R⁶, R⁷, R8 und R⁹ unabhängig voneinander für H oder C₁-C₆-Alkyl stehen, m eine ganze Zahl von 0 bis 20 und p eine ganze Zahl von 0 bis 10 ist.

Bevorzugt stehen R² bis R⁹ für Wasserstoff, m für den Wert 0 oder 1 und p für den Wert 1.

Bevorzugte Verbindungen f₄) bzw. f₅) sind Maleinsäure, Fumarsäure und Maleinsäureanhydrid bzw. Alkenylglycidylether und Vinylglycidylether.

Besonders bevorzugte Verbindungen der Formeln IV und V bzw. VI und VII sind Maleinsäure und Maleinsäureanhydrid bzw. Epoxygruppen enthaltende Ester der Acrylsäure und/oder Methacrylsäure, insbesondere Glycidylacrylat und Glycidylmethacrylat.

Besonders bevorzugt sind Olefinpolymerisate aus
- 50 bis 98,9,: insbesondere 60 bis 94,85 Gew.-% Ethylen, und
- 1 bis 50,: insbesondere 5 bis 40 Gew.-% eines Esters der Acryl- oder Methacrylsäure
- 0,1 bis 20,0,: insbesondere 0,15 bis 15 Gew.-% Glycidylacrylat und/oder Glycidylmethacrylat, Acrylsäure und/oder Maleinsäureanhydrid.

Besonders geeignete funktionalisierte Kautschuke F sind Ethylen-Methylmethacrylat-Glycidylmethacrylat-,
Ethylen-Methylacrylat-Glycidylmethacrylat-,
Ethylen-Methylacrylat-Glycidylacrylat- und
Ethylen-Methylmethacrylat-Glycidylacrylat-Polymere.
Als sonstige Monomere f₆) kommen z.B. Vinylester und Vinylether in Betracht.

Die Herstellung der vorstehend beschriebenen Polymere kann nach an sich bekannten Verfahren erfolgen, vorzugsweise durch statistische Copolymerisation unter hohem Druck und erhöhter Temperatur.

Der Schmelzindex der Copolymeren liegt im allgemeinen im Bereich von 1 bis 80 g/10 min (gemessen bei 190°C und 2,16 kg Belastung).

Als weitere Gruppe von geeigneten Kautschuken sind Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glasübergangstemperatur von mindestens 25°C, unter einem weichen Bestandteil ein Polymerisat mit einer Glasübergangstemperatur von höchstens 0°C. Diese Produkte weisen eine Struktur aus einem Kern und mindestens einer Schale auf, wobei sich die Struktur durch die Reihenfolge der Monomerenzugabe ergibt. Die weichen Bestandteile leiten sich i.a. von Butadien, Isopren, Alkylacrylaten, Alkylmethacrylaten oder Siloxanen und gegebenenfalls weiteren Comonomeren ab. Geeignete Siloxankeme können beispielsweise ausgehend von cyclischem oligomerem Octamethyltetrasiloxan oder Tetravinyltetramethyltetrasiloxan hergestellt werden. Diese können beispielsweise mit γ-Mercaptopropylmethyldimethoxysilan in einer ringöffnenden kationischen Polymerisation, vorzugsweise in Gegenwart von Sulfonsäuren, zu den weichen Siloxankemen umgesetzt werden. Die Siloxane können auch vernetzt werden, indem z.B. die Polymerisationsreaktion in Gegenwart von Silanen mit hydrolysierbaren Gruppen wie Halogen oder Alkoxygruppen wie Tetraethoxysilan, Methyltrimethoxysilan oder Phenyltrimethoxysilan durchgeführt wird. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich i.a. von Styrol, α-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen, erfolgt hierbei vorzugsweise durch den Zusatz geeignet funktionalisierter Monomere bei der Polymerisation der letzten Schale. Geeignete funktionalisierte Monomere sind beispielsweise Maleinsäure, Malein-säureanhydrid, Mono- oder Diester oder Maleinsäure, tertiär-Butyl(meth)-acrylat, Acrylsäure, Glycidyl(meth)acrylat und Vinyloxazolin. Der Anteil an Monomeren mit funktionellen Gruppen beträgt i.a. 0,1 bis 25 Gew.-%, vorzugsweise 0,25 bis 15 Gew.-%, bezogen auf das Gesamtgewicht des Kern-Schale-Pfropfkautschuks. Das Gewichtsverhältnis von weichen zu harten Bestandteilen beträgt i.a 1:9 bis 9:1, bevorzugt 3:7 bis 8:2.

Derartige Kautschuke sind an sich bekannt und beispielsweise in der EP-A-0 208 187 beschrieben. Der Einbau von Oxazingruppen zur Funktionalisierung kann z.B. gemäß EP-A-0 791 606 erfolgen.

Eine weitere Gruppe von geeigneten Schlagzähmodifiern sind thermoplastische Polyester-Elastomere. Unter Polyesterelastomeren werden dabei segmentierte Copolyetherester verstanden, die langkettige Segmente, die sich in der Regel von Poly(alkylen)etherglycolen und kurzkettige Segmente, die sich von niedermolekularen Diolen und Dicarbonsäuren ableiten, enthalten. Derartige Produkte sind an sich bekannt und in der Literatur, z.B. in der US 3,651,014, beschrieben. Auch im Handel sind entsprechende Produkte unter den Bezeichnungen Hytrel® (Du Pont), Arnitel® (Akzo) und Pelprene® (Toyobo Co. Ltd.) erhältlich.
Selbstverständlich können auch Mischungen verschiedener Kautschuke eingesetzt werden.

### Komponente G

Komponente G liegt in den erfindungsgemäßen Pormmassen in einer Menge von 0 bis 40, bevorzugt 0 bis 20, vorzugsweise 0 bis 10, bei Stabilisatoren insbesondere 0 bis 1 Gew.-% vor.

Komponente G enthält die üblichen Zusatzstoffe und Verarbeitungshilfsmittel für Polyamid-Blends. Als solche Zusatzstoffe seien beispielsweise genannt: Farbstoffe, Pigmente, Färbemittel, Antistatika, Antioxidantien, Stabilisatoren zur Verbesserung der Thermostabilität, zur Erhöhung der Lichtstabilität, zum Anheben der Hydrolysebeständigkeit und der Chemikalienbeständigkeit, Mittel gegen die Wärmezersetzung und insbesondere die Schmier-/Gleitmittel, die für die Herstellung von Formkörpern beziehungsweise Formteilen zweckmäßig sind. Das Eindosieren dieser weiteren Zusatzstoffe kann in jedem Stadium des Herstellungsprozesses erfolgen, vorzugsweise jedoch zu einem frühen Zeitpunkt, um frühzeitig die Stabilisierungseffekte (oder andere spezielle Effekte) des Zusatzstoffes auszunutzen. Beispielsweise können, insbesondere in Polyphenylether-Blends, Flammschutzmittel zugesetzt werden. Geeignete Flammschutzmittel sind zum Beispiel Polyhalogendiphenyl, Polyhalogen-diphenylether, Polyhalogenphthalsäure und ihre Derivate, Polyhalogenoligo- und -polycarbonate, wobei die entsprechenden Bromverbindungen besonders wirksam sind.

Beispiele hierfür sind Polymere des 2,6,2',6'-Tetrabrombisphenols A, der Tetrabromphthalsäure, des 2,6-Dibromphenols und 2,4,6-Tribromphenols und deren Derivate. Bevorzugtes Flammschutzmittel ist elemantarer Phosphor. In der Regel kann der elementare Phosphor mit zum Beispiel Polyurethanen oder Aminoplasten phlegmatisiert oder gecoated werden. Außerdem sind Konzentrate von rotem Phosphor zum Beispiel in einem Polyamid, Elastomeren oder Polyolefinen geeignet. Besonders bevorzugt sind Kombinationen von elementarem Phosphor mit 1,2,3,4,7,8,9,10,13,13,14,14-Dodecachloro-1,4,4a,5,6,6a,7,10,10a,11,12,12a-dodecahydro-1,4:7,10-dimethanodibenzoe(a,e)-cyclooctan (Dechlorane®Plus, Occidental Chemical Corp.) und gegebenenfalls einem Synergisten, wie Antimontrioxid. Phosphorverbindungen, wie organische Phosphate, Phosphonate, Phosphinate, Phosphinoxide, Phosphine oder Phosphite sind ebenfalls bevorzugt. Als Beispiel seien Triphenylphosphinoxid und Triphenylphosphat genannt. Dieses kann allein oder vermischt mit Hexabrombenzol oder einem chlorierten Biphenyl und, wahlweise, Antimonoxid verwendet werden. Typisch für die bevorzugten Phosphorverbindungen, die gemäß der vorliegenden Erfindung verwendet werden können, sind solche der allgemeinen Formel 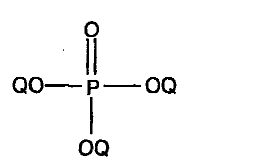 worin Q für gleiche oder verschiedene Kohlenwasserstoffreste, wie Alkyl, Cycloalkyl, Aryl, alkylsubstituiertes Aryl und arylsubstituiertes Alkyl steht, ferner für Halogen, Wasserstoff und deren Kombinationen, vorausgesetzt, daß mindestens einer der für Q stehenden Reste ein Arylrest ist.

### Beispiele solcher geeigneter Phosphate sind die folgenden:

Phenylbisdodocylphosphat, Phenylbisneopentylphosphat, Phenylethylhydrogen-phosphat, Phenyl-bis-(3 5,5'-trimethylhexylphosphat), Ethyldiphenylphosphat, 2-Ethylhexyldi(ptolyl)phosphat, Bis-(2-ethylhexyl)phenylphosphat, Tri(nonyl-phenyl)phosphat, Phenylmethylhydogenphosphat, Di(dodecyl)-p-tolylphosphat, Tri-cresylphosphat, Triphenylphosphat, Dibutylphenylphosphat und Diphenylhydrogenphosphat. Die bevorzugten Phosphate sind solche, bei denen jedes Q Aryl ist. Das am meisten bevorzugte Phosphat ist Triphenylphosphat. Weiter ist die Kombination von Triphenylphosphat mit Hexabrombenzol und Antimontrioxid bevorzugt.

Als Flammschutzmittel sind auch solche Verbindungen geeignet, die Phosphor-Stickstoff-Bindungen enthalten, wie Phosphornitrilchlorid, Phosphorsäure-esteramide, Phosphorsäureesteramine, Phosphorsäureamide, Phosphonsäuramide, Tris(aziridinyl)phosphinoxid oder Tetrakis(hydroxymethyl)phosphoniumchlorid. Diese entflammungshemmenden Additive sind größtenteils im Handel erhältlich.

Weitere geeignete Flammschutzmittel sind Hydroxide des Magnesiums, welche gegebenenfalls mit Silanverbindungen beschichtet sind.

Weitere halogenhaltige Flammschutzmittel sind Tetrabrombenzol, Hexachlorbenzol und Hexabrombenzol sowie halogenierte Polystyrole und Polyphenylenether.

Auch die in der DE-A- 19 46 924 beschriebenen halogenierten Phthalimide können verwendet werden. Von diesen hat insbesondere N,N'-Ethylenbistetrabromphthalimid Bedeutung erlangt.

Weitere übliche Zusatzstoffe sind beispielsweise Stabilisatoren und Oxidationsinhibitoren, Mittel gegen Wärmezersetzung und Zersetzung durch ultraviolettes Licht, Gleit- und Entformungsmittel, Farbstoffe, Pigmente und Weichermacher.
Oxidationsverzögerer und Wärmestabilisatoren, die den erfindungsgemäßen Formmassen zugesetzt werden können, sind zum Beispiel Halogenide von Metallen der Gruppe I des Periodensystems, zum Beispiel Natrium-, Kalium-, Lithium-halogenide, gegebenenfalls in Verbindung mit Kupfer-(I)-Halogeniden, zum Beispiel Chloriden, Bromiden oder Iodiden. Weiterhin können Zinkfluorid und Zinkchlorid verwendet werden. Ferner sind sterisch gehinderte Phenole, Hydrochinone, substituierte Vertreter dieser Gruppe und Mischungen dieser Verbindungen, vorzugsweise in Konzentrationen bis 1 Gew.-% bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 23 Gew.-% eingesetzt werden.

Gleit- und Entformungsmittel, die in der Regel in Mengen bis zu 1 Gew.-% der Formmasse zugesetzt werden, sind Stearinsäure, Stearylalkohol, Sterainsäurealkylester und -amide sowie Ester des Pentaerythrits mit langkettigen Fettsäuren.

Unter den Zusatzstoffen sind auch Stabilisatoren, die die Zersetzung des roten Phosphors in Gegenwart von Feuchtigkeit und Luftsauerstoff verhindern. Als Beispiele seien Verbindungen des Cadmiums, Zinks, Aluminiums, Silbers, Eisens, Kupfers, Antimons, Zinns, Magnesiums, Mangans, Vanadiums, Bors und Titans genannt. Besonders geeignete Verbindungen sind zum Beispiel Oxide der genannten Metalle, ferner Carbonate oder Oxicarbonate, Hydroxide sowie Salze organischer oder anorganischer Säuren wie Acetate oder Phosphate beziehungsweise Hydrogenphosphate und Sulfate.

Als bevorzugten Stabilisator können die erfindungsgemäßen Formmassen mindestens eine phosphorhaltige anorganische Säure oder deren Derivate in Mengen bis zu 1.000, bevorzugt 30 bis 200 und insbesondere 50 bis 130 ppm, bezogen auf den Phosphorgehalt der Verbindungen, enthalten.
Bevorzugte Säuren sind hypophosphorige Säure, phosphorige Säure oder Phosphorsäure sowie deren Salze mit Alkalimetallen, wobei Natrium und Kalium besonders bevorzugt sind. Unter organischen Derivaten dieser Säuren sollen vorzugsweise Esterderivate obengenannter Säuren mit Fettsäuren verstanden werden, wobei die Fettsäuren 12 bis 44 C-Atome, bevorzugt 22 bis 40 C-Atome aufweisen. Als Beispiele seien Stearinsäure, Behensäure, Palmitinsäure oder Montansäure genannt.

Als Keimbildungsmittel können Natriumphenylphosphinat, Aluminiumoxid, Siliciumdioxid, Nylon 22 sowie bevorzugt Talkum eingesetzt werden.

Gleit- und Entformungsmittel, welche üblicherweise in Mengen bis zu 1 Gew.-% eingesetzt werden, sind bevorzugt langkettige Fettsäuren (zum Beispiel Stearinsäure oder Behensäure), deren Salze (zum Beispiel Ca- oder Zn-stearat) oder Esterderivate (zum Beispiel Stearylstearat oder Pentaerythrittetrastearat) sowie Amidderivate (zum Beispiel Ethylen-bis-stearylamid).

Als Beispiel für Weichmacher seien Phthalsäuredioctylester, Phthal-säuredibenzylester, Phthalsäurebutylbenzylester, Kohlenwasserstofföle, N-(n-Butyl)benzolsulfonamid und o-und p- Tolylethylsulfonamid genannt.

Pigmente und Farbstoffe sind allgemein in Mengen bis zu 4, bevorzugt 0,5 bis 3,5 und insbesondere 0,5 bis 3 Gew.-% enthalten.
Die Pigmente zur Einfärbung von Thermoplasten sind allgemein bekannt, siehe zum Beispiel R. Gächter und H. Müller, Taschenbuch der Kunststoffadditive, Carl Hanser Verlag, 1983, Seite 494 bis 510. Als erste bevorzugte Gruppe von Pigmenten sind Weißpigmente zu nennen wie Zinkoxid, Bleiweiß (2 PbCO₃ Pb(OH)₂), Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet.
Schwarze Farbpigmente, die erfindungsgemäß eingesetzt werden können, sind Eisenoxidschwarz (Fe₃O₄), Spinellschwarz (Cu(Cr,Fe)₂O₄), Manganschwarz (Mischung aus Mangandioxid, Siliciumdioxid und Eisenoxid), Kobaltschwarz und Antimonschwarz sowie besonders bevorzugt Ruß, der meist in Form von Furnace- oder Gasruß eingesetzt wird (siehe hierzu G. Benzing, Pigmente für Anstrichmittel, Expert-Verlag (1988), Seite 78 ff).
Selbstverständlich können zur Einstellung bestimmter Farbtöne anorganische Buntpigmente wie Chromoxidgrün oder organische Buntpigmente wie Azopigmente und Phthalocyanine erfindungsgemäß eingesetzt werden. Derartige Pigmente sind allgemein im Handel üblich.

Weiterhin kann es von Vorteil sein, die genannten Pigmente beziehungsweise Farbstoffe in Mischungen einzusetzen, zum Beispiel Ruß mit Kupferphthalocyaninen, da allgemein die Farbdispergierung im Thermoplasten erleichtert wird.

### Komponente H

Als Komponente H werden Kupferbromid und/oder Kupferjodid in einer Menge von 100 ppm bis 0,5 Gew.-% , vorzugsweise 0,001 bis 0,1 Gew.-%, insbesondere 0,005 bis 0,02 Gew.-%, bezogen auf die Komponenten A bis G eingesetzt.

Die erfindungsgemäßen Formmassen können nach bekannten Verfahren durch Vermischen der Komponenten A, C, D, E, H und gegebenenfalls B, F und G hergestellt werden.

Die Reihenfolge, in der die Komponenten gemischt werden, ist beliebig. Die erfindungsgemäßen Formmassen können beispielsweise durch Extrusion hergestellt werden, beispielsweise, indem man die Ausgangskomponenten in üblichen Mischvorrichtungen wie Schneckenextrudern, vorzugsweise zwei Schneckenextrudern, Brabender-Mischem oder Banburry-Mischern oder Knetern mischt und anschließend extrudiert. Nach der Extrusion wird das Extrudat abgekühlt und zerkleinert. Die Reihenfolge der Mischung der Komponenten kann
variiert werden, so können zwei oder gegebenenfalls drei Komponenten vorgemischt werden. Es können aber auch alle Komponenten gemeinsam gemischt werden.
Um eine möglichst homogene Durchmischung zu erhalten, ist eine intensive Mischung vorteilhaft. Dazu sind im allgemeinen mittlere Mischzeiten von 0,2 bis 30 Minuten bei Temperaturen von 280 bis 370°C, bevorzugt 290 bis 360°C erforderlich. Nach der Extrusion wird das Extrudat in der Regel abgekühlt und zerkleinert.
Die erfindungsgemäßen Formmassen besitzen eine sehr gute thermische Beständigkeit bei Temperaturen bis 150°C, sowie eine verbesserte Fließfähigkeit und Schlagzähigkeit.

Die Erfindung wird durch die nachstehenden Beispiele näher erläutert.

### Beispiele:

Die Viskositätszahl der Polyaryle wird in 1%-iger Lösung von N-Methylpyrrolidon bei 25°C bestimmt. Der Anteil der Einheiten mit Säuregruppen in den Copolyarylethern C) wurde wie bei I.W. Parsons et. al., Polymer 34, 2836 (1993) beschrieben, durch ¹H-NMR-Spektroskopie ermittelt.
Die Konzentration der OH-Endgruppen wird mittels potentiometrischer Titration in Dimethylformamid bestimmt.
Die Viskosität der Polyamide wird nach DIN 53 727 an 0,5 gew.-%-igen Lösungen in 96 Gew.-% Schwefelsäure ermittelt.

### Herstellung und Prüfung der Formmassen

Die Wärmeformbeständigkeit der Proben wurde mittels der Vicat-Erweichungstemperatur ermittelt. Die Vicat-Erweichungstemperatur wurde nach DIN 53 460, mit einer Kraft von 49,05 N und einer Temperatursteigerung von 50 K je Stunde, an Normkleinstäben ermittelt.
Die Schlagzähigkeit der Produkte wurde an ISO-Stäben nach ISO 179 leU bestimmt. Die Steifigkeit (E-Modul) wurde nach DIN 53 457, die Zugfestigkeit und Reißdehnung nach DIN 53 455 ermittelt.

Die Fließfähigkeit wurde nach DIN 53 735 bei 300°C und 10 kg Belastung bestimmt.

Zur Charakterisierung der thermischen Beständigkeit wurden Zugstäbe bei 180°C über eine Zeitraum von 1.000 h gelagert. Nach 100, 500 und 1.000 h wurden Probekörper entnommen und im Zugversuch getestet. In Tabelle 1 aufgeführt ist jeweils das Niveau der Reißfestigkeit nach Lagerung bezogen auf das Ausgangsniveau (in %).

### Komponente A1

Als Polyarylenethersulfon A1 wurde Ultrason® E 2010 (Handelsprodukt der BASF AG) verwendet. Dieses Produkt ist charakterisiert durch eine Viskositätszahl von 54 ml/g, gemessen in 1 %-iger NMP-Lösung bei 25°C.

### Komponente B1

Unter Stickstoffatmosphere wurden 5,167 kg Dichlordiphenylsulfon, 4,3905 kg Dihydroxydiphenylsulfon und 128,85 g 4,4'-Di-hydroxyvaleriansäure in 29 kg N-Methylpyrrolidon gelöst und mit 2,820 kg wasserfreiem Kaliumcarbonat versetzt. Die Reaktionsmischung wurde bei einem Druck von 300 mbar unter ständigem Abdestillieren des Reaktionswassers und N-Methylpyrrolidon zunächst 1 h auf 180°C erhitzt und dann 6 h bei 190°C weiter umgesetzt. Nach Zugabe von 40 kg N-Methylpyrrolidon wurden die anorganischen Bestandteile abfiltriert. Durch Zugabe von 300 ml Eisessig wurden basische Gruppen neutralisiert, anschließend wurde das Polymere durch Fällung in Wasser isoliert. Nach 3-maliger Extraktion mit Wasser wurde das Produkt bei 140°C im Vakuum getrocknet. Es wurde ein weißes Pulver erhalten.
Der Anteil an Einheiten mit Säuregruppen wurde mittels H-NMR zu 1,4 mol-% bestimmt, die Viskositätszahl des Produkts betrug 32,7 ml/g.

### Komponente B2

Unter Stickstoffatmosphere wurden 5,740 kg Dichlordiphenylsulfon, 5,003 kg Dihydroxydiphenylsulfon in 29 kg N-Methylpyrrolidon gelöst und mit 2,820 kg wasserfreiem Kaliumcarbonat versetzt.
Die Reaktionsmischung wurde bei einem Druck von 300 mbar unter ständigem Abdestillieren des Reaktionswassers und N-Methylpyrrolidon zunächst 1 h auf 180°C erhitzt und dann 6 h bei 190°C weiter umgesetzt. Nach Zugabe von 40 kg N-Methylpyrrolidon wurden die anorganischen Bestandteile abfiltriert. Durch Zugabe von 300 ml Eisessig wurden basische Gruppen neutralisiert, anschließend wurde das Polymere durch Fällung in Wasser isoliert. Nach 3-maliger Extraktion mit Wasser wurde das Produkt bei 140°C im Vakuum getrocknet. Es wurde ein weißes Pulver erhalten.
Der Anteil an OH-Endgruppen wurde zu 0,14 Gew.-% bestimmt, die Viskositätszahl des Produkts betrug 56,2 ml/g.

### Komponente C1

Als Polyamid C1 wurde ein teilaromatisches Copolyamid, kondensiert aus 55 Gew.-Teilen Terephthalsäure, 35 Gew.-Teilen ε-Caprolactam und 38,5 Teilen Hexamethylendiamin, charakterisiert durch eine Viskositätiszahl von 210 ml/g (gemessen 0,5 gew.-ig in 96%-iger Schwefelsäure). Dieses Produkt ist desweiteren durch eine Glasstufe bei 110°C und einen Schmelzpeak bei 289°C charakterisiert.

### Komponente C2

Als Polyamid C2 wurde ein Polyamid 6, erhalten aus ε-Caprolactam, mit einer Viskositätszahl von 250 ml/g verwendet (gemessen 0,5 gew.-%-ig in 96%-iger Schwefelsäure), z.B. Ultramid® B4.

### Komponente D1

Epoxid-Harz mit einem Erweichungspunkt von 150°C und einer Epoxid-Zahl von 0,37 Eq/kg, z.B. Araldit® 6609 von Ciba.

### Komponente E1

Schnittglasfaser mit Polyurethanschlichte, Faserdurchmesser 10µm.

### Komponente H

Als Stabilisator wurde CuI verwendet.

Die Komponenten wurden in einem Zweiwellenextruder bei einer Massetemperatur von 300 bis 350°C gemischt. Die Schmelze wurde durch ein Wasserbad geleitet und granuliert.
Die Polyethersulfon enthaltenden Formmassen wurden bei 340°C verarbeitet. Die Formtemperatur war jeweils 100°C.

Die Ergebnisse der Prüfungen sind in der nachfolgenden Tabelle 1 aufgeführt.

**Tabelle 1:**

| **Formmasse** | **V1** | **1** | **2** | **V2** | **V3** | **3** | **4** |
|---|---|---|---|---|---|---|---|
| **A1** | 49 | 48 | 46 | 49 | 42 | 46 | 46 |
| **B1** | - | - | - | - | 7 | 2 | - |
| **B2** | - | - | 2 | - | - | - | 2 |
| **C1** | 20,99 | 20,99 | 20,99 | - | - | - | - |
| **C2** | - | - | - | 20,99 | 20,99 | 20,99 | 20,99 |
| **D1** | - | 1 | 1 | - | - | 1 | 1 |
| **E1** | 30 | 30 | 30 | 30 | 30 | 30 | 30 |
| **H** | 0,01 | 0,01 | 0,01 | 0,01 | 0,01 | 0,01 | 0,01 |
| **Vicat B [°C]** | 206 | 205 | 205 | 202 | 203 | 203 | 203 |
| **an [kJ/m**^{**2**}**]** | 51 | 59 | 62 | 52 | 65 | 69 | 67 |
| **E-Modul [kN/mm**^{**2**}**]** | 11,7 | 11,7 | 11,6 | 11,7 | 11,8 | 11,7 | 11,8 |
| **MVI [ml/10']** | 24 | 34 | 36 | 32 | 27 | 41 | 39 |
| **Reißfestig- keit [%]** | | | | | | | |
| **Nach 100 h** | 96 | 94 | 95 | 97 | 95 | 96 | 96 |
| **Nach 250 h** | 87 | 86 | 89 | 91 | 91 | 92 | 92 |
| **Nach 1000 h** | 83 | 82 | 83 | 90 | 89 | 91 | 91 |

Die erfindungsgemäßen thermoplastischen Formmassen weisen sehr gute thermische Beständigkeit sowie verbesserte Fließfähigkeit und Schlagzähigkeit auf.

## Patentansprüche

1. Thermoplastische Formmasse, enthaltend die Komponenten A, C, D, E und gegebenenfalls B, F und G, deren Gesamtgewicht 100 Gew.-% ergibt, sowie die Komponente H,
a) 5 - 94,8 Gew.-% mindestens eines Polyarylethersulfons als Kompo-nente A,
b) 1 - 10 Gew.-% mindestens eines funktionalisierten Polyarylether-sulfons als Komponente B,
c) 5 - 94,8 Gew.-% mindestens eines Polyamids als Komponente C,
d) 0,1 - 10 Gew.-% mindestens eines Epoxidharzes als Komponente D,
e) 0,1 - 60 Gew.-% faser- oder teilchenförmige Füllstoffe oder deren Mischungen als Komponente E,
f) 0 - 40 Gew.-% schlagzähmodifizierende Kautschuke, die funktio-nelle Gruppen aufweisen, als Komponente F,
g) 0-40 Gew.-% weiterer üblicher Zusatzstoffe und Verarbeitungs-hilfsmittel als Komponente G,
h) 100 ppm - 0,5 Gew.-%, bezogen auf die Mengen der Komponenten A bis G Kupferbromid und/oder Kupferiodid als Komponente H.

2. Formmassen nach Anspruch 1, **dadurch gekennzeichnet, daß** die Komponente A aufgebaut ist aus wiederkehrenden Einheiten der Formel I 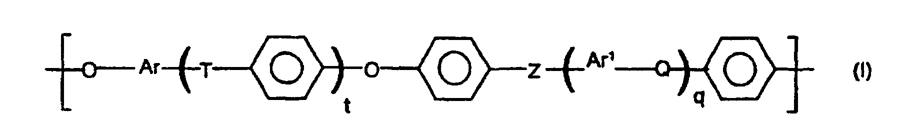 worin
t und q unabhängig voneinander für 0, 1, 2 oder 3 stehen,
Q, T, und Z unabhängig voneinander jeweils eine chemische Bindung oder eine Gruppe, ausgewählt unter -O-, -S-, -SO₂-, S=O, C=O, -N=N-, -R^{a}C=CR^{b}- und-CR^{c}R^{d}-, bedeuten,
wobei
R^{a} und R^{b} unabhängig voneinander jeweils für ein Wasserstoffatom oder eine C₁-C₁₂-Alkylgruppe stehen und
R^{c} und R^{d} unabhängig voneinander jeweils für ein Wasserstoffatom oder eine C1-C₁₂-Alkyl-, C₁-C₁₂-Alkoxy- oder C₆-C₁₈-Arylgruppe stehen,
wobei
R^{c} und R^{d} gegebenenfalls unabhängig voneinander mit Fluor- und/oder Chloratomen substituiert sind oder gegebenenfalls zusammen mit dem C-Atom, an das sie gebunden sind, eine C₃-C₁₂-Cycloalkylgruppe bilden, die gegebenenfalls mit einer oder mehreren C₁-C₆-Alkylgruppen substituiert ist, mit der Maßgabe, daß mindestens eine der Gruppen T, Q und Z für -SO₂- oder C=O steht und, wenn t und
q für 0 stehen, Z für -SO₂- steht,
Ar und Ar¹ unabhängig voneinander für C₆-C₁₈-Arylengruppen stehen, wobei diese gegebenenfalls mit C₁-C₁₂-Alkyl-, C₆-C₁₈-Aryl-, C₁-C₁₂-Alkoxygruppen oder Halogenatomen substituiert sind.

3. Formmasse nach Anspruch 1 oder 2, **dadurch gekennzeichnet, daß** als Komponente E Kohlenstofffasern, Kaliumtitanatwhisker, Aramidfasern oder Glasfasern verwendet werden.

4. Formmasse nach einem der Ansprüche 1 bis 3, **dadurch gekennzeichnet, daß** die Komponente D die nachstehende allgemeine Formel II D aufweist: 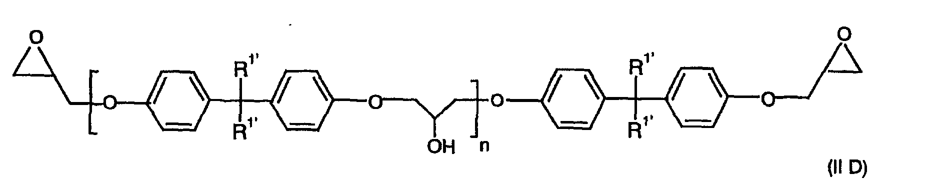 mit
n = 2 bis 50.
R^{1'} Wasserstoff oder C₁₋₁₆-Alkyl.

5. Verfahren zur Herstellung von Formmassen gemäß einem der Ansprüche 1 bis 4 durch Mischen der Komponenten A, C, D, E, H und gegebenenfalls B, F und G.

6. Verwendung von Formmassen gemäß einem der Ansprüche 1 bis 4 zur Herstellung von Fasern, Folien und Formkörpern.

7. Fasern, Folien oder Formkörper aus einer Formmasse gemäß einem der Ansprüche 1 bis 4.

## Claims

1. A thermoplastic molding composition comprising components A, C, D, E and, where appropriate, B, F and G, the total weight of which is 100% by weight, and also component H:
a) as component A, from 5 to 94.8% by weight of at least one polyaryl ether sulfone,
b) as component B, from 1 to 10% by weight of at least one functionalized polyaryl ether sulfone,
c) as component C, from 5 to 94.8% by weight of at least one polyamide,
d) as component D, from 0.1 to 10% by weight of at least one epoxy resin,
e) as component E, from 0.1 to 60% by weight of fibrous or particulate fillers or a mixture of these,
f) as component F, from 0 to 40% by weight of impact-modifying rubbers which have functional groups,
g) as component G, from 0 to 40% by weight of other conventional additives and processing aids,
h) as component H, from 100 ppm to 0.5% by weight, based on the amounts of components A to G, of copper bromide and/or copper iodide.

2. A molding composition as claimed in claim 1, wherein the structure of component A has repeat units of the formula I 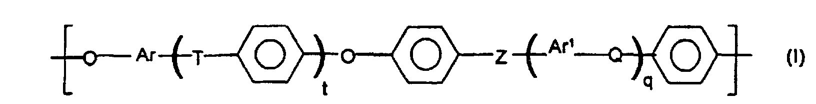 where
t and q, independently of one another, are 0, 1, 2 or 3,
each of Q, T and Z, independently of one another, is a chemical bond or a group selected from the class consisting of -O-, -S-, -SO₂-, S=O, C=O, -N=N-, -R^{a}C=CR^{b}- and -CR^{c}R^{d}-,
where
each of R^{a} and R^{b}, independently of one another, is hydrogen or C₁-C₁₂-alkyl and
each of R^{c} and R^{d}, independently of one another, is hydrogen or C₁-C₁₂-alkyl, C₁-C₁₂-alkoxy or C₆-C₁₈-aryl,
where R^{c} and R^{d} may, if desired, independently of one another have fluorine and/or chlorine substituents or, together with the carbon atom to which they are bonded, may form a C₃-C₁₂-cycloalkyl group, which may be unsubstituted or substituted by one or more C₁-C₆-alkyl groups, with the proviso that at least one of the groups T, Q and Z is -SO₂-or C=O and if t and q are 0, Z is -SO₂-, and
Ar and Ar¹, independently of one another, are C₆-C₁₈-arylene, unsubstituted or substituted by C₁-C₁₂-alkyl, C₆-C₁₈-aryl, C₁-C₁₂-alkoxy or halogen.

3. A molding composition as claimed in claim 1 or 2, wherein carbon fibers, potassium titanate whiskers, aramid fibers or glass fibers are used as component E.

4. A molding composition as claimed in any of claims 1 to 3, wherein component D has the following formula II D: 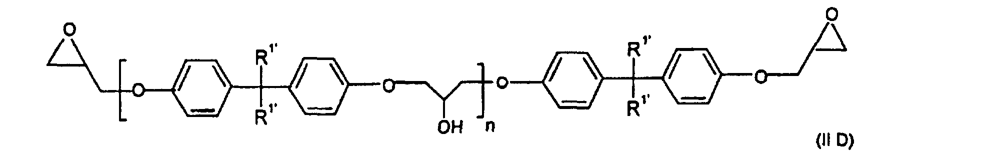 where
n = from 2 to 50, and
R^{1'} is hydrogen or C₁-C₁₆-alkyl.

5. A process for preparing molding compositions as claimed in any of claims 1 to 4 by mixing components A, C, D, E, H and, where appropriate, B, F and G.

6. The use of molding compositions as claimed in any of claims 1 to 4 for producing fibers, films or moldings.

7. A fiber, a film or a molding made from a molding composition as claimed in any of claims 1 to 4.

## Revendications

1. Masse de moulage thermoplastique contenant les composants A, C, D, E et éventuellement B, F et G, dont le poids global donne 100% en poids, ainsi que le composant H,
a) 5-94,8% en poids d'au moins une polyaryléthersulfone, comme composant A,
b) 1-10% en poids d'au moins une polyaryléthersulfone fonctionnalisée, comme composant B,
c) 5-94,8% en poids d'au moins un polyamide, comme composant C,
d) 0,1-10% en poids d'au moins une résine époxy, comme composant D,
e) 0,1-60% en poids de matières de remplissage fibreuses ou particulaires ou de leurs mélanges, comme composant E,
f) 0-40% en poids de caoutchoucs de modification à la résistance au choc, qui présentent des groupes fonctionnels, comme composant F,
g) 0-40% en poids d'autres additifs et agents auxiliaires de traitement courants, comme composant G,
h) 100 ppm-0,5% en poids, par rapport aux quantités des composants A à G, de bromure de cuivre et/ou d'iodure de cuivre, comme composant H.

2. Masse de moulage suivant la revendication 1, **caractérisée en ce que** le composant A est constitué d'unités répétitives de la formule I : 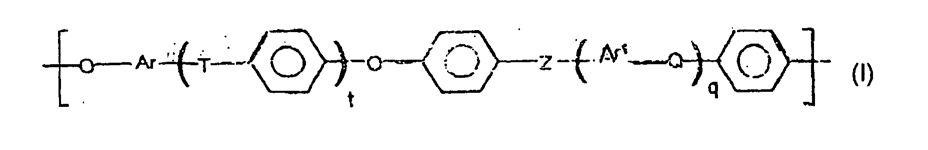 dans laquelle t et q représentent indépendamment l'un de l'autre 0, 1, 2 ou 3,
Q, T et Z représentent indépendamment l'un de l'autre une liaison chimique ou un groupe choisi parmi -O-, -S-, -SO₂-, S=O, C=O, -N=N-, -R^{a}C=CR^{b}- et -CR^{c}R^{d}-,
R^{a} et R^{b} représentant indépendamment l'un de l'autre un atome d'hydrogène ou un groupe alkyle en C₁-C₁₂, et
R^{c} et R^{d} représentant indépendamment l'un de l'autre un atome d'hydrogène ou un groupe alkyle en C₁-C₁₂, alcoxy en C₁-C₁₂ ou aryle en C₆-C₁₈,
R^{c} et R^{d} étant éventuellement substitués indépendamment l'un de l'autre par des atomes de fluor et/ou de chlore ou formant éventuellement, conjointement avec l'atome de C auquel ils sont liés, un groupe cycloalkyle en C₃-C₁₂ qui est éventuellement substitué par un ou plusieurs groupes alkyle en C₁-C₆, à la condition qu'au moins un des groupes T, Q et Z représente -SO₂- ou C=O et, lorsque t et q représentent 0, Z représente -SO₂-,
Ar et Ar¹ représentant indépendamment l'un de l'autre des groupes arylène en C₆-C₈, ceux-ci étant éventuellement substitués par des groupes alkyle en C₁-C₁₂, aryle en C₆-C₁₈, alcoxy en C₁-C₁₂ ou par des atomes d'halogène.

3. Masse de moulage suivant l'une des revendications 1 et 2, **caractérisée en ce que**, comme composant E, on utilise des fibres de carbone, des barbes de titanate de potassium, des fibres d'aramide ou des fibres de verre.

4. Masse de moulage suivant l'une des revendications 1 à 3, **caractérisée en ce que** le composant D présente la formule générale II D suivante : 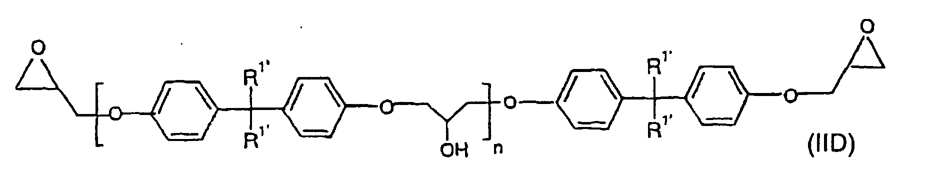 où
n = 2 à 50,
R^{1'} représente de l'hydrogène ou de l'alkyle en C₁-C₁₆

5. Procédé de préparation de masses de moulage suivant l'une des revendications 1 à 4, par mélange des composants A, C, D, E, H et éventuellement B, F et G.

6. Utilisation de masses de moulage suivant l'une des revendications 1 à 4, pour la fabrication de fibres, de feuilles et de corps façonnés.

7. Fibres, feuilles ou corps façonnés à base d'une masse de moulage suivant l'une des revendications 1 à 4.
